# EUROPEAN PATENT SPECIFICATION

(11) **EP 2 254 091 B1**
(45) Date of publication and mention of the grant of the patent: **25.03.2020**
(21) Application number: 09006736.4
(22) Date of filing: 19.05.2009
(51) Int. Cl.: G06T 3/40, B60R 1/00, H04N 7/18

(54) **Vision system and method for a motor vehicle**
Sichtsystem und -verfahren für ein Kraftfahrzeug
Système de vision et procédé pour véhicule à moteur

(43) Date of publication of application: 24.11.2010
(73) Proprietor: Veoneer Sweden AB, 447 83 Vårgårda (SE)
(72) Inventor: Lindgren, Leif, 58336 Linköping (SE)
(74) Representative: Müller Verweyen

(56) References cited:
- EP-A1- 1 641 268
- WO-A1-2009/011458
- US-A1- 2008 231 703

## Description

The invention relates to a vision system for a motor vehicle, comprising at least one imaging device adapted to detect images from a region surrounding the motor vehicle, and an electronic processing means for processing image data provided by said imaging device, wherein said imaging device comprises an image sensor. Furthermore, the invention relates to a corresponding vision method.

Such systems are generally known, see for example US 7 158 664 B2. Due to the limited processing and memory resources in a motor vehicle a compromise between detection efficiency and costs has to be found.

EP 1 641 268 A1 discloses a vision system for a motor comprising a plurality of cameras adapted to capture images of the vehicles surroundings, an images synthesis section for generating a synthesized image from said captured images, and a moving object detection section for detecting, in the synthesized image, a moving object region estimated as a region where a moving object is present.

US 2008/0231703 A1 and WO 2009/011458 A1 disclose related vision systems for a motor vehicle.

US 2008/0291470 A1 discloses a location system and a location system on a chip and method.

The object of the invention is to provide a reliable and cost-efficient vision system for a motor vehicle.

The invention solves this object with the features of the independent claims. According to the invention, a window is cut out of the whole image area already in the image sensor of the imaging device and only the cut-out window is transmitted to the electronic (pre-)processing means for further image and data processing. Thereby the amount of data that needs to be transferred, processed and stored is reduced already at the start point of signal generation.

In the context of the present application, image sensor means the electronic device where the detected radiation is converted into an electric signal. The execution of the windowing already in the image sensor distinguishes the invention from the known use of image windows in image processing procedures performed behind the image sensor. Preferably the image sensor is an infrared sensor or a CMOS device.

Preferably the window parameters are set individually depending on the relative orientation of the imaging device, i.e. the orientation of the imaging device relative to the vehicle or relative to another imaging device. This feature distinguishes the invention from cutting out a constant window arranged in the complete sensor area independent of the orientation of the imaging device.

The individual setting of the window parameters depending on the relative orientation of the imaging device is particularly advantageous in the application according to the invention in a stereo vision system, including two imaging devices, like infrared cameras or CMOS cameras, each comprising an image sensor. According to the invention, in this application the window parameters are set independently for every image sensor. The cutting-out of the individual image windows depending on the orientation of the corresponding imaging device may be regarded as a first step of aligning the stereo images relative to each other. In this manner, the aligning and matching process of the stereo images in the following electronic (pre-)processing means can be performed much faster and with less memory consumption.

Preferably the window parameters of the imaging device are set by the electronic processing means, rendering an additional parameter setting means unnecessary.

Preferably the vision system comprises a memory means for storing the window parameters, which allows to predetermine the window parameters in a measurement procedure and store them in the memory means in advance, for example by the vehicle manufacturer or a service station. Alternatively it is also possible to determine the window parameters during driving based on analysis of image data from the imaging means.

In the following the invention shall be illustrated on the basis of preferred embodiments with reference to the accompanying drawings, wherein:
- Fig. 1: shows a schematic diagram of a vision system for a motor vehicle; and
- Fig. 2: shows an example of stereo images detected by a stereo vision system.

The vision system 10 is mounted in a motor vehicle and comprises an imaging means 11 for detecting images of a region surrounding the motor vehicle, for example a region in front of the motor vehicle. Preferably the imaging means 11 is an infrared device and more preferably comprises one or more optical and/or infrared cameras 12a, 12b, where infrared covers near IR with wavelengths below 5 microns and/or far IR with wavelengths beyond 5 microns. Preferably the imaging means 11 comprises two cameras 12a, 12b forming a stereo imaging means 11.

Each camera 12a, 12b comprises an optics arrangement 20a, 20b and a two-dimensional image sensor 21a, 21b, in particular an infrared sensor or an optical sensor, provided to convert incident infrared radiation or visible light transmitted through the camera 12a, 12b into an electrical signal containing image information of the detected scene.

The cameras 12a, 12b are coupled to an image pre-processor 13 adapted to control the capture of images by the cameras 12a, 12b, receive the electrical signal containing the image information from the image sensors 21a, 21b, warp pairs of left/right images into alignment and create disparity images, which per se is known in the art. The image pre-processor 13 may be realized by a dedicated hardware circuit. Alternatively the pre-processor 13, or part of its functions, can be realized in the electronic processing means 14.

The pre-processed image data is then provided to an electronic processing means 14 where further image and data processing is carried out by corresponding software. In particular, the image and data processing in the processing means 14 comprises the following functions: identification and classification of possible objects in front of the motor vehicle, such as other motor vehicles, pedestrians, bicyclists or large animals; tracking over time the position of identified object candidates in the detected images; activation or control of vehicle safety means 17, 18, 19 ... depending on the result of the object detection and tracking processing.

The vehicle safety means 17, 18, 19, ... may comprise a warning means 17 adapted to provide a collision warning to the driver by suitable optical, acoustical and/or haptical warning signals; display means 18 for displaying information relating to an identified object; one or more restraint systems 19 such as occupant airbags or safety belt tensioners; pedestrian airbags, hood lifters and the like; and/or dynamic vehicle control systems such as brakes.

The electronic processing means 14 expediently has access to a memory means 15.

The electronic processing means 14 is preferably programmed or programmable and may comprise a microprocessor or microcontroller. The image pre-processor 13, the electronic processing means 14 and the memory means 15 are preferably realised in an on-board electronic control unit (ECU) 16 and may be connected to the cameras 12a, 12b preferably via a separate cable or alternatively via a vehicle data bus. In another embodiment, the ECU and a camera 12a, 12b can be integrated into a single unit. All steps from imaging, image pre-processing, image processing to activation or control of safety means 17, 18, 19 - are performed automatically and continuously during driving in real time.

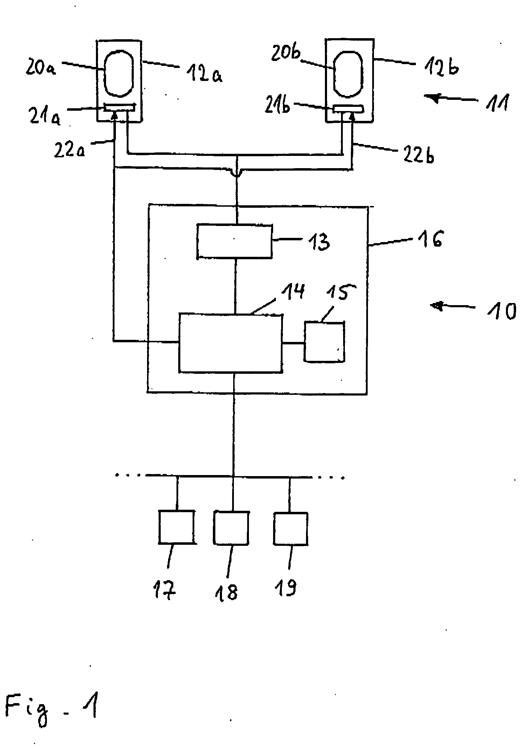

Each of the image sensors 21a, 21b comprises a window input 22a, 22b for specifying individual window parameters to each image sensor 21a, 21b. Preferably the window parameters are stored in the memory means 15 and transmitted to the image sensors 21a, 21b by the processing means 14, as shown in Fig. 1. However, it is also possible that the window parameters are transmitted to the image sensors 21a, 21b by the pre-processor 13 or another suited device in the electronic control unit 16.

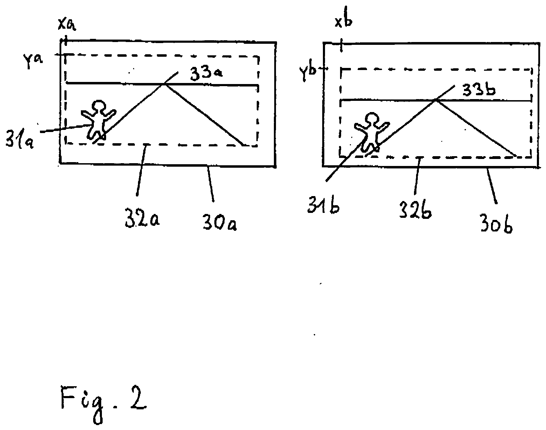

The process of cutting out individual window image parts of the complete image areas is explained using the exemplary images 30a, 30b shown in Fig. 2. Image 30a is assumed to have been detected by the camera 12a, where the image area 30a corresponds to the complete sensitive area, or entire sensor array, of the image sensor 21a. Similarly, image 30b is assumed to have been detected by the camera 12b, where the image area 30b corresponds to the complete sensitive area, or entire sensor array, of the image sensor 21b.

In the example of Fig. 2, the cameras 12a and 12b are slightly misaligned. In particular, the left camera 30a is slightly oriented off-centre to the bottom right such that the contents of image 30a, for example the pedestrian image 31a, are slightly shifted to the top left, and the right camera 30b is slightly oriented off-centre to the top left such that the contents of image 30b, for example the pedestrian image 31b, are slightly shifted to the bottom right.

If the whole image areas 30a, 30b are transmitted to the pre-processor 13, equal image contents appear at different positions in the stereo images 30a, 30b. For example the top of the pedestrian 31 appears several lines and columns earlier in the left image 30a than in the right image 30b. This leads to an enlarged latency and memory consumption for the stereo matching of the images 30a, 30b in the pre-processor 13. For example if the stereo matching is performed line by line in the pre-processor 13, the matching of the line containing the top of the pedestrian 31a in the left image 30a cannot be started until this line appears much later in the right image 30b, and all lines in between have to be buffered in memory.

According to the invention, smaller window image parts 32a, 32b are individually cut out of the whole image areas 30a, 30b in a manner that the image contents in the window image parts 32a, 32b are closely matching, in order to compensate for any misalignment of the cameras 12a, 12b. The windowing process is already performed in the image sensors 21a, 21b in order to benefit from reduced data amounts as early as possible; only a reduced amount of image data has to be transmitted from the cameras 12a, 12b to the electronic control unit 16 and stored therein.

The individual window parameters applied to the window input 22a, 22b of the image sensors 21a, 21b may for example comprise the x,y-coordinates of a predetermined point of the window area 32a, 32b (coordinates xa, ya and xb, yb of the upper left window corner in Fig. 2). The window parameters applied to the window input 22a, 22b may also comprise information about the window size, such as number of rows and columns of the window. Alternatively the window size may be preset in the image sensors 21a, 21b.

Due to the above described windowing, equal image contents appear at approximately equal vertical positions in the window images 32a, 32b. This leads to reduced latency and memory consumption for the stereo matching of the window images 32a, 32b in the pre-processor 13. For example if the stereo matching is performed line by line in the pre-processor 13, the matching of the line containing the top of the pedestrian 31a in the left image window 32a can be started without large delay because this line appears in the right image window 32b at the same line or in any case with a much smaller line offset.

The window parameters to be applied to the image sensors 21a, 21b can be pre-determined for example by the vehicle manufacturer or a service station in a measuring procedure determining the alignment of the cameras 12a, 12b in the vehicle, and stored in the memory means 15 for use during driving. However, it is also possible to determine the alignment of the cameras 12a, 12b in the vehicle during driving, for example by determining an offset of a vanishing point 33a, 33b from the centre of the image area 30a, 30b, and calculate the individual window parameters from the determined (mis)alignment.

## Claims

1. A stereo vision system (10) for a motor vehicle, comprising two imaging devices (12a, 12b) adapted to detect images from a region surrounding the motor vehicle, and an electronic processing means (14) for processing image data provided by said imaging devices (12a, 12b), wherein each imaging device (12a, 12b) comprises an image sensor (21a, 21b), **characterized in that** said vision system (10) is adapted to input window parameters to each image sensor (21a, 21b) for cutting out and outputting a window image part (32) of the complete image area (30) of each image sensor (21a, 21b), wherein the window parameters are set independently for every image sensor (21a, 21b), wherein each of the image sensors (21a, 21b) comprises a window input (22a, 22b) for specifying individual window parameters to each image sensor (21a, 21b).

2. The vision system according to claim 1, wherein the window parameters are set individually depending on the relative orientation of said imaging devices (12a, 12b).

3. The vision system according to any one of the preceding claims, wherein each imaging device (12a, 12b) is an infrared camera or a CMOS camera.

4. The vision system according to any one of the preceding claims, wherein each image sensor (21a, 21b) is an infrared sensor or a CMOS sensor.

5. The vision system according to any one of the preceding claims, wherein the window parameters are input to each image sensor (21a, 21b) by said electronic processing means (14).

6. The vision system according to any one of the preceding claims, comprising memory means (15) for storing the window parameters.

7. The vision system according to claim 6, wherein said window parameters are predetermined in a measurement procedure and stored in said memory means (15) in advance.

8. The vision system according to any one of the preceding claims, comprising an image pre-processing device (13) adapted to pre-process windowed image data (32) provided by said image sensors (21a, 21b).

9. The vision system according to claim 8, wherein said pre-processing device (13) is adapted to warp the windowed image data (32) into alignment before stereo matching.

10. The vision system according to any one of the preceding claims, wherein said window parameters comprise the coordinates of a specific image point of the image window (32) .

11. A computer implemented stereo vision method for a motor vehicle, comprising the steps of detecting images from a region in front of the motor vehicle using two vehicle mounted imaging devices comprising a respective image sensor, and processing image data provided by said imaging devices in a vehicle mounted electronic processing means, **characterized by** inputting window parameters to each image sensor, cutting out a window image part, defined by said window parameters, of the complete image area of each image sensor, and outputting said window image part from each image sensor, wherein the window parameters are set independently for every image sensor, wherein to each image sensor individual window parameters are specified by a window input comprised by each of the image sensors.

12. The vision method according to claim 11, wherein said window parameters are individually adjusted in order to compensate the relative orientation of said imaging device in the vehicle.

## Patentansprüche

1. Ein Stereosichtsystem (10) für ein Kraftfahrzeug, wobei das Stereosichtsystem zwei bildgebende Vorrichtungen (12a, 12b), die dafür ausgelegt sind, Bilder von einem das Kraftfahrzeug umgebenden Gebiet aufzunehmen, und ein elektronisches Verarbeitungsmittel (14) zum Verarbeiten von Bilddaten, die durch die bildgebenden Vorrichtungen (12a, 12b) bereitgestellt werden, umfasst, wobei jede bildgebende Vorrichtung (12a, 12b) einen Bildsensor (21a, 21b) umfasst, **dadurch gekennzeichnet, dass** das Sichtsystem (10) dafür ausgelegt ist, in jeden Bildsensor (21a, 21b) Fensterparameter zum Ausschneiden und Ausgeben eines Fensterbildteils (32) des vollständigen Bildbereichs (30) jedes Bildsensors (21a, 21b) einzugeben, wobei die Fensterparameter für jeden Bildsensor (21a, 21b) unabhängig eingestellt werden, wobei jeder der Bildsensoren (21a, 21b) einen Fenstereingang (22a, 22b) zum Spezifizieren individueller Fensterparameter für jeden Bildsensor (21a, 21b) umfasst.

2. Das Sichtsystem nach Anspruch 1, wobei die Fensterparameter in Abhängigkeit von der relativen Orientierung der bildgebenden Vorrichtungen (12a, 12b) individuell eingestellt werden.

3. Das Sichtsystem nach einem der vorhergehenden Ansprüche, wobei jede bildgebende Vorrichtung (12a, 12b) eine Infrarotkamera oder eine CMOS-Kamera ist.

4. Das Sichtsystem nach einem der vorhergehenden Ansprüche, wobei jeder Bildsensor (21a, 21b) ein Infrarotsensor oder ein CMOS-Sensor ist.

5. Das Sichtsystem nach einem der vorhergehenden Ansprüche, wobei die Fensterparameter in jeden Bildsensor (21a, 21b) durch das elektronische Verarbeitungsmittel (14) eingegeben werden.

6. Das Sichtsystem nach einem der vorhergehenden Ansprüche, das Speichermittel (15) zum Speichern der Fensterparameter umfasst.

7. Das Sichtsystem nach Anspruch 6, wobei die Fensterparameter in einer Messprozedur vorherbestimmt werden und im Voraus in dem Speichermittel (15) gespeichert werden.

8. Das Sichtsystem nach einem der vorhergehenden Ansprüche, das eine Bildvorverarbeitungsvorrichtung (13) umfasst, die dafür ausgelegt ist, durch die Bildsensoren (21a, 21b) bereitgestellte gefensterte Bilddaten (32) vorzuverarbeiten.

9. Das Sichtsystem nach Anspruch 8, wobei die Vorverarbeitungsvorrichtung (13) dafür ausgelegt ist, die gefensterten Bilddaten (32) vor der Stereoverarbeitung in Ausrichtung zu verziehen.

10. Das Sichtsystem nach einem der vorhergehenden Ansprüche, wobei die Fensterparameter die Koordinaten eines spezifischen Bildpunkts des Bildfensters (32) umfassen.

11. Ein computerimplementiertes Verfahren für ein Stereosichtsystem für ein Kraftfahrzeug, wobei das Verfahren die Schritte des Aufnehmens von Bildern aus einem Gebiet vor dem Kraftfahrzeug unter Verwendung zweier in dem Fahrzeug montierter bildgebende Vorrichtungen, die einen jeweiligen Bildsensor umfassen, und des Verarbeitens durch die bildgebenden Vorrichtungen bereitgestellter Bilddaten in einem in dem Fahrzeug montierten elektronischen Verarbeitungsmittel umfasst, **gekennzeichnet durch** das Eingeben von Fensterparametern in jeden Bildsensor, das Ausschneiden eines durch die Fensterparameter definierten Fensterbildteils aus dem vollständigen Bildbereich jedes Bildsensors und das Ausgeben des Fensterbildteils von jedem Bildsensor, wobei die Fensterparameter für jeden Bildsensor unabhängig eingestellt werden, wobei für jeden Bildsensor individuelle Fensterparameter durch einen in jedem der Bildsensoren enthaltenen Fenstereingang spezifiziert werden.

12. Das Sichtsystem nach Anspruch 11, wobei die Fensterparameter individuell eingestellt werden, um die relative Orientierung der bildgebenden Vorrichtung in dem Fahrzeug zu kompensieren.

## Revendications

1. Un système de vision stéréoscopique (10) pour un véhicule à moteur, comprenant deux dispositifs de formation d'image (12a, 12b) adaptés à détecter des images provenant d'une région entourant le véhicule à moteur et un moyen de traitement électronique (14) pour traiter des données d'image fournies par lesdits dispositifs de formation d'image (12a, 12b), chaque dispositif de formation d'image (12a, 12b) comprenant un capteur d'image (21a, 21b), **caractérisé en ce que** ledit système de vision (10) est adapté à entrer des paramètres de fenêtre dans chaque capteur d'images (21a, 21b) pour découper et délivrer une partie d'image de fenêtre (32) de la zone d'image complète (30) de chaque capteur d'image (21a, 21b), les paramètres de fenêtre étant réglés indépendamment pour chaque capteur d'image (21a, 21b), chacun des capteurs d'image (21a, 21b) comprenant une entrée de fenêtre (22a, 22b) pour spécifier des paramètres de fenêtre individuels pour chaque capteur d'image (21a, 21b).

2. Le système de vision selon la revendication 1, dans lequel les paramètres de fenêtre sont réglés individuellement en fonction de l'orientation relative desdits dispositifs de formation d'image (12a, 12b).

3. Le système de vision selon l'une quelconque des revendications précédentes, dans lequel chaque dispositif de formation d'image (12a, 12b) est une caméra infrarouge ou une caméra CMOS.

4. Le système de vision selon l'une quelconque des revendications précédentes, dans lequel chaque capteur d'image (21a, 21b) est un capteur infrarouge ou un capteur CMOS.

5. Le système de vision selon l'une quelconque des revendications précédentes, dans lequel les paramètres de fenêtre sont entrés dans chaque capteur d'image (21a, 21b) par ledit moyen de traitement électronique (14).

6. Le système de vision selon l'une quelconque des revendications précédentes, comprenant un moyen de mémorisation (15) pour stocker les paramètres de fenêtre.

7. Le système de vision selon la revendication 6, dans lequel lesdits paramètres de fenêtre sont prédéterminés dans une procédure de mesure et stockés dans ledit moyen de mémorisation (15) à l'avance.

8. Le système de vision selon l'une quelconque des revendications précédentes, comprenant un dispositif de prétraitement d'image (13) adapté à prétraiter des données d'image fenêtrées (32) fournies par lesdits capteurs d'image (21a, 21b).

9. Le système de vision selon la revendication 8, dans lequel ledit dispositif de prétraitement (13) est adapté à déformer les données d'image fenêtrées (32) en alignement avant appariement stéréo.

10. Le système de vision selon l'une quelconque des revendications précédentes, dans lequel lesdits paramètres de fenêtre comprennent les coordonnées d'un point d'image spécifique de la fenêtre d'image (32).

11. Un procédé de vision stéréoscopique pour un véhicule à moteur mis en œuvre par ordinateur, comprenant les étapes consistant à détecter des images à partir d'une région en avant du véhicule à moteur en utilisant deux dispositifs de formation d'image montés sur le véhicule, comprenant un capteur d'image respectif, et traiter des données d'image fournies par lesdits dispositifs de formation d'image dans un moyen de traitement électronique monté sur le véhicule, **caractérisé par** les étapes consistant à entrer des paramètres de fenêtre dans chaque capteur d'image, découper une partie d'image de fenêtre, définie par lesdits paramètres de fenêtre, de la zone d'image complète de chaque capteur d'image, et délivrer ladite partie d'image de fenêtre à partir de chaque capteur d'image, les paramètres de fenêtre étant réglés indépendamment pour chaque capteur d'image, des paramètres de fenêtre individuels étant spécifiés pour chaque capteur d'image par une entrée de fenêtre comprise par chacun des capteurs d'image.

12. Le procédé de vision selon la revendication 11, dans lequel lesdits paramètres de fenêtre sont réglés individuellement pour compenser l'orientation relative dudit dispositif de formation d'image dans le véhicule.
